# EUROPEAN PATENT APPLICATION

(11) **EP 4 813 737 A1**
(43) Date of publication of application: **30.09.2026**
(21) Application number: 26159681.1
(22) Date of filing: 19.02.2026
(51) Int. Cl.: B60N 2/14

(54) **ROTARY SUPPORT STRUCTURE**

(30) Priority: 20.02.2025 CN 202520279792 U
(71) Applicant: Yanfeng International Automotive Technology Co., Ltd., Shanghai 201306 (CN)
(72) Inventor: CHEN, Fangfang, Shanghai, 201306 (CN); CAO, Wei, Shanghai, 201306 (CN); LIANG, Zeng, Shanghai, 201306 (CN); ZHOU, Haiyang, Shanghai, 201306 (CN)
(74) Representative: Specht, Peter

(57) **Abstract**

The present invention relates to a rotary support structure, comprising an upper connecting plate, a lower connecting plate, a stationary disc, a movable disc, an outer ring friction member, and an inner ring friction member, wherein: the upper connecting plate is rotatable relative to the lower connecting plate about a central axis of a seat frame; the upper connecting plate is connected to the seat frame via a third fastener; the stationary disc and the movable disc are both arranged between the upper and lower connecting plates; the stationary disc is connected to the lower connecting plate via a second fastener; the movable disc is connected to the upper connecting plate via a first fastener; the outer ring friction member is clamped between the upper connecting plate and an outer edge of the stationary disc; and the inner ring friction member is clamped between an inner edge of the stationary disc and an outer edge of the movable disc. The present invention is equipped with two sets of friction members and enables clamping on both sides of each friction member, ensuring effective clamping, reducing vibration-induced noise, enhancing overall rigidity, and meanwhile achieving good operational smoothness.

## Description

### Technical Field

The present invention relates to the field of automotive seat technology, and particularly to a rotary support structure.

### Background of Invention

In order to enable the entire seat to rotate about a central axis-thereby achieving a welcome mode or facilitating face-to-face communication with rear passengers-a rotary support structure is typically arranged between the seat and a fixed structure (e.g., sliding rails) beneath the seat. This rotary support structure includes a fixed portion and a movable portion rotatable relative to the fixed portion. The fixed portion is connected to the fixed structure, while the movable portion is connected to the seat frame. Rotation of the seat is achieved by driving the movable portion to rotate relative to the fixed portion.

While the vehicle is in motion, due to the influence of vehicle vibration, vibration-induced noise easily occurs between the movable portion and the fixed portion. To address this issue, the current practice usually involves arranging a plastic friction member between the two portions. In order to better fix and clamp the friction member, embracing clamps are typically welded respectively onto the fixed portion and the movable portion, and the two embracing clamps are arranged in an overlapping manner, with the friction member clamped in the overlapping region, thereby reducing vibration-induced noise via the friction member.

The aforementioned existing practice has the following drawbacks: To clamp the friction member, it is necessary to install the friction member after welding one embracing clamp but before welding the other embracing clamp, followed by welding the other embracing clamp. However, during the welding of the other embracing clamp, thermal effects are imparted to the contact surface of the friction member, causing part to be prone to deformation and resulting in poor operational smoothness. Moreover, this practice only applies clamping pressure on the outer side of the friction member, offering limited clamping effectiveness. Additionally, the upper connecting plate mating with the friction member exhibits insufficient rigidity and is prone to deformation, thereby generating vibration-induced noise.

### Summary of Invention

To solve the aforementioned problems, the present invention provides a rotary support structure equipped with two sets of friction members, capable of applying clamping force on both sides of each friction member. This ensures effective clamping of the friction members, reduces vibration-induced noise, and enables smoother overall operation.

The present invention achieves the above objective via the following technical solution:
A rotary support structure, characterized in that it is used to enable a seat frame to rotate horizontally about a central axis, wherein the rotary support structure comprises a rotating joint assembly, the rotating joint assembly comprising a lower connecting plate, an upper connecting plate rotatable relative to the lower connecting plate about the central axis, a stationary disc and a movable disc arranged between the upper connecting plate and the lower connecting plate, an outer ring friction member and an inner ring friction member, wherein:
the movable disc is tightly connected to the upper connecting plate via a first fastener, the stationary disc is tightly connected to the lower connecting plate via a second fastener, and the upper connecting plate is tightly connected to the seat frame via a third fastener; and
the outer ring friction member is clamped between the upper connecting plate and an outer edge of the stationary disc, and the inner ring friction member is clamped between an inner edge of the stationary disc and an outer edge of the movable disc.

Further, the rotating joint assembly further comprises a fourth fastener, wherein the upper connecting plate is tightly connected to the seat frame via the third fastener and the fourth fastener to enhance the rigidity of the rotary support structure.

Further, the upper connecting plate is provided with an inner mounting surface for connection with the fourth fastener and an outer mounting surface for connection with the third fastener, located respectively on inner and outer sides of the outer ring friction member, and wherein the height of the outer mounting surface is higher than that of the inner mounting surface in an unassembled state, so as to clamp the outer ring friction member in an assembled state.

Further, the rotary support structure further comprises a control mechanism mounted on the upper connecting plate and acting on the stationary disc, or mounted on the lower connecting plate and acting on the movable disc, to control rotation of the upper connecting plate relative to the lower connecting plate.

Further, the control mechanism comprises an electric locking stationary disc, an electric locking movable disc, and a drive motor, wherein one of the electric locking stationary disc and the electric locking movable disc is connected to the lower connecting plate, and the other of the electric locking stationary disc and the electric locking movable disc is connected directly or indirectly to the upper connecting plate or the movable disc; wherein the electric locking movable disc is rotatable relative to the electric locking stationary disc, and the drive motor drives or locks the relative rotation between the electric locking movable disc and the electric locking stationary disc.

Further, the control mechanism comprises a manual locking mounting member and a manual locking pin, wherein the manual locking mounting member is mounted on the upper connecting plate, and the manual locking pin is movably mounted on the manual locking mounting member so that the manual locking pin can pass through the stationary disc to restrict rotation of the movable disc relative to the stationary disc.

Further, one of the outer ring friction member and the inner ring friction member is a friction strip, and the other of the outer ring friction member and the inner ring friction member is a ball assembly.

Further, both the outer ring friction member and the inner ring friction member are ball assemblies.

Further, both the outer ring friction member and the inner ring friction member are friction strips.

Further, an inner edge and an outer edge of the stationary disc extend toward the upper connecting plate and are folded inwardly and outwardly to form a first inner flange and a first outer flange, respectively; an outer edge of the movable disc extends toward the lower connecting plate and is folded outwardly to form a second outer flange; the outer ring friction member is clamped between the upper connecting plate and the first outer flange of the stationary disc; and the inner ring friction member is clamped between the first inner flange of the stationary disc and the second outer flange of the movable disc.

Further, a plurality of protrusions arranged at intervals in a circumferential direction are formed on the friction strip, and a plurality of snap holes configured for inserting the respective plurality of protrusions in a one-to-one correspondence are provided on the first outer flange and/or the first inner flange of the stationary disc corresponding to the friction strip.

Further, a plurality of elongated ears arranged at intervals in a circumferential direction are formed on the friction strip, and a plurality of notches configured for engaging the respective plurality of elongated ears in a one-to-one correspondence are provided on an outer edge of the first outer flange and/or an inner edge of the first inner flange of the stationary disc corresponding to the friction strip.

Further, the outer ring friction member and/or the inner ring friction member is a continuous annular structure, or a discontinuous annular structure formed by arranging a plurality of first arcuate segments and a plurality of second arcuate segments at intervals, wherein the first arcuate segment has a first elastic coefficient, and the second arcuate segment has a second elastic coefficient lower than the first elastic coefficient.

Further, the outer ring friction member is a friction strip formed on the outer edge of the stationary disc by overmolding; and/or the inner ring friction member is a friction strip formed on the inner edge of the stationary disc or on the outer edge of the movable disc by overmolding.

In the present invention, components contacting the friction members are all fixed using fasteners, avoiding thermal effects on the friction member contact surfaces caused by welding, thereby ensuring better operational smoothness. Furthermore, fasteners enable tightening and clamping on both sides of the friction members, achieving superior clamping effectiveness and reducing vibration-induced noise. Additionally, the cooperative arrangement of inner and outer ring friction members further mitigates vibration-induced noise.

### Brief Description of Drawings

Figure 1 shows a schematic view of the assembled state of the rotating joint assembly in the first embodiment of the present invention.
Figure 2 shows a schematic view of the exploded state of the rotating joint assembly in the first embodiment of the present invention.
Figure 3 shows a sectional view along line A1-A1 of Figure 1.
Figure 4 shows a partially enlarged schematic view of Figure 3.
Figure 5 shows a partially enlarged schematic view of the rotating joint assembly in the second embodiment of the present invention, corresponding to the viewing angle of Figure 4.
Figure 6 shows a partially enlarged schematic view of the rotating joint assembly in the third embodiment of the present invention, corresponding to the viewing angle of Figure 4.
Figure 7 shows a partially enlarged schematic view of the rotating joint assembly in the fourth embodiment of the present invention, corresponding to the viewing angle of Figure 4.
Figure 8 shows a schematic view of the assembled state of the rotating joint assembly according to the present invention with a seat cushion frame.
Figure 9 shows a partially enlarged schematic view of Figure 8 along line A4-A4.
Figure 10 shows an equivalent schematic view illustrating the comparison of stress conditions of the rotating joint assembly before and after adding a fourth bolt.
Figure 11 shows a schematic view of the assembled state of the rotating joint assembly according to the present invention with an electric locking mechanism.
Figure 12 shows a schematic view of the exploded state of the rotating joint assembly according to the present invention with the electric locking mechanism.
Figure 13 shows a sectional view along line A2-A2 of Figure 11.
Figure 14 shows a schematic view of the assembled state of the rotating joint assembly according to the present invention with a manual locking mechanism.
Figure 15 shows a schematic view of the exploded state of the rotating joint assembly according to the present invention with a manual locking mechanism.
Figure 16 shows a sectional view along line A3-A3 of Figure 14.
Figure 17 shows an overall structural schematic view of the stationary disc in the fourth embodiment of the present invention.
Figure 18 shows an enlarged schematic view of portion B in Figure 17.
Figure 19 shows an overall structural schematic view of the outer ring friction member in the fourth embodiment of the present invention.
Figure 20 shows an overall structural schematic view of the inner ring friction member in the fourth embodiment of the present invention.
Figure 21 shows a partially enlarged schematic view of the inner ring friction member in the fourth embodiment of the present invention.
Figure 22 shows an enlarged schematic view of portion E in Figure 7.
Figure 23 shows a schematic view of the assembled state of the inner retaining groove and the extended ear in the fourth embodiment of the present invention.
Figure 24 shows an enlarged schematic view of portion C in Figure 18.
Figure 25 shows an enlarged schematic view of portion D in Figure 18.
Figure 26 shows an overall structural schematic view of the ball assembly in the present invention.
Figures 27 to 31 show sectional views of different overmolding configurations for the inner and outer friction members on either the movable disc or the stationary disc.

In the drawings:
1 - upper connecting plate; 1w - outer mounting surface; 1n - inner mounting surface; 2 - lower connecting plate; 3 - stationary disc; 3n - first inner flange; 3w - first outer flange; 31 - locking boss; 32 - snap hole; 33 - notch; 4 - movable disc; 4w - second outer flange; 41 - cover plate-movable disc connecting hole; 5 - outer ring friction member; 6 - inner ring friction member; 61 - protrusion; 62 - elongated ear; 63 - retainer; 64 - ball; 71 - upper embracing clamp; 72 - lower embracing clamp; 81 - first fastener; 81a - first screw rod; 81b - first nut; 82 - second fastener; 82a - second screw rod; 82b - second nut; 83 - third fastener; 83a - third screw rod; 83b - third nut; 84 - fourth fastener; 84a - fourth screw rod; 84b - fourth nut; 85 - fifth fastener; 85a - fifth screw rod; 85b - fifth nut; 86 - sixth fastener; 86a - sixth screw rod; 86b - sixth nut; 87 - seventh fastener; 87a - seventh screw rod; 87b - seventh nut; 91 - upper cover plate; 911 - cover plate-movable disc connecting hole; 912 - cover plate-locking connecting hole; 92 - electric locking stationary disc; 93 - electric locking movable disc; 94 - drive motor; 95 - manual locking mounting member; 96 - manual locking pin; 100 - rotating joint assembly; 200 - seat frame; 201 - frame mounting surface.

### Detailed Description of Drawings

To address issues such as the poor effectiveness of existing rotary support structures in reducing vibration and noise, and the inability to ensure overall operational smoothness., the present invention provides a rotary support structure equipped with two sets of friction members, capable of applying clamping force on both sides of each friction member. This ensures effective clamping of the friction members, reduces vibration-induced noise, and enables smoother overall operation. The rotary support structure will be further described below with reference to specific embodiments and accompanying drawings.

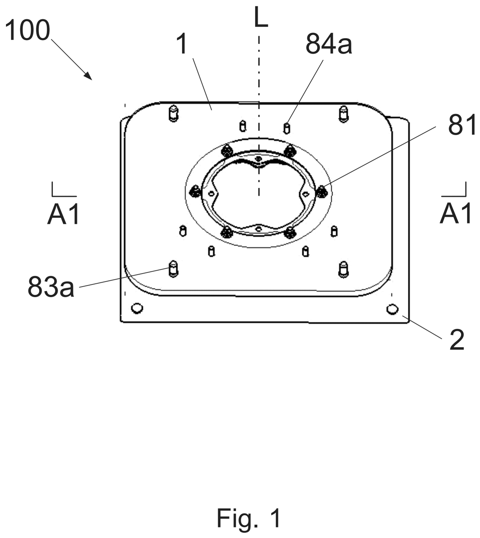

In a first embodiment, referring to Figures 1-4 and Figure 9, a rotary support structure is provided, which is used to enable a seat frame 200 to rotate horizontally about a central axis L. The rotary support structure includes a rotating joint assembly 100, which comprises an upper connecting plate 1, a lower connecting plate 2, a stationary disc 3, a movable disc 4, an outer ring friction member 5, an inner ring friction member 6, and further includes a first fastener 81, a second fastener 82, and a third fastener 83, wherein: the upper connecting plate 1 is rotatable relative to the lower connecting plate 2 about the central axis L; the upper connecting plate 1 is tightly connected to the seat frame 200 via the third fastener 83; the lower connecting plate 2 is used to connect to a fixed structure beneath the seat frame 200. The stationary disc 3 and the movable disc 4 are both arranged between the upper connecting plate 1 and the lower connecting plate 2. The stationary disc 3 is tightly connected to the lower connecting plate 2 via the second fastener 82, and the movable disc 4 is tightly connected to the upper connecting plate 1 via the first fastener 81. The outer ring friction member 5 is clamped between the upper connecting plate 1 and the outer edge of the stationary disc 3, and the inner ring friction member 6 is clamped between the inner edge of the stationary disc 3 and the outer edge of the movable disc 4. Preferably, the inner and outer edges of the stationary disc 3 extend toward the upper connecting plate 1 and are folded inwardly and outwardly to form a first inner flange 3n and a first outer flange 3w, respectively; the outer edge of the movable disc 4 extends toward the lower connecting plate 2 and is folded outwardly to form a second outer flange 4w. The outer ring friction member 5 is clamped between the upper connecting plate 1 and the first outer flange 3w, and the inner ring friction member 6 is clamped between the first inner flange 3n and the second outer flange 4w.

In this embodiment, components contacting the friction members (including the upper connecting plate 1, the stationary disc 3, and the movable disc 4) are all fixed using fasteners, thereby avoiding thermal effects on the friction member contact surfaces caused by welding and ensuring better operational smoothness. Moreover, fasteners enable tightening and clamping on both sides of the friction members, achieving superior clamping effectiveness and reducing vibration-induced noise. Additionally, the cooperative arrangement of inner and outer ring friction members further mitigates vibration-induced noise.

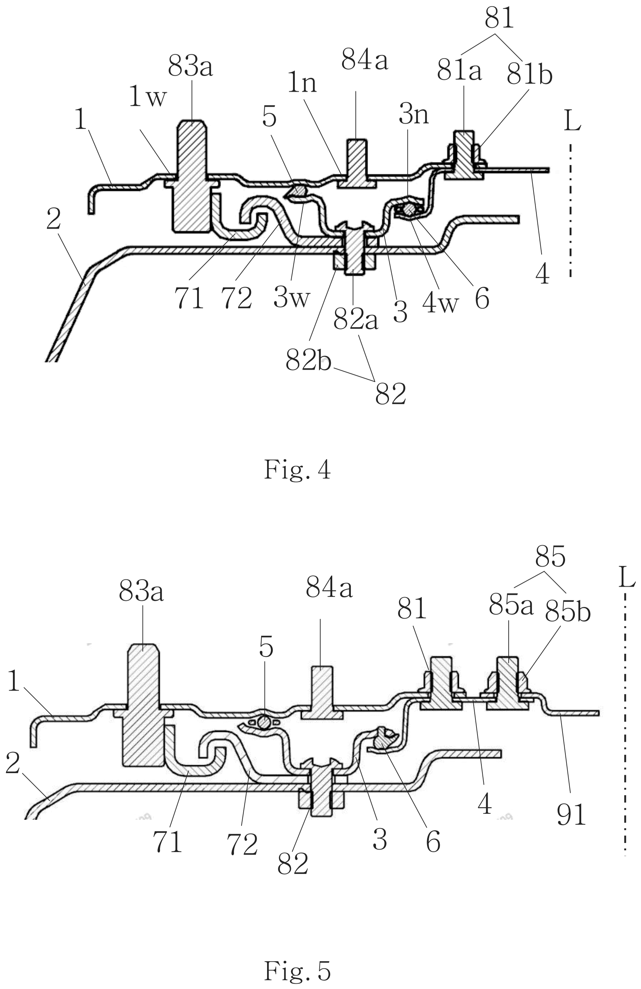

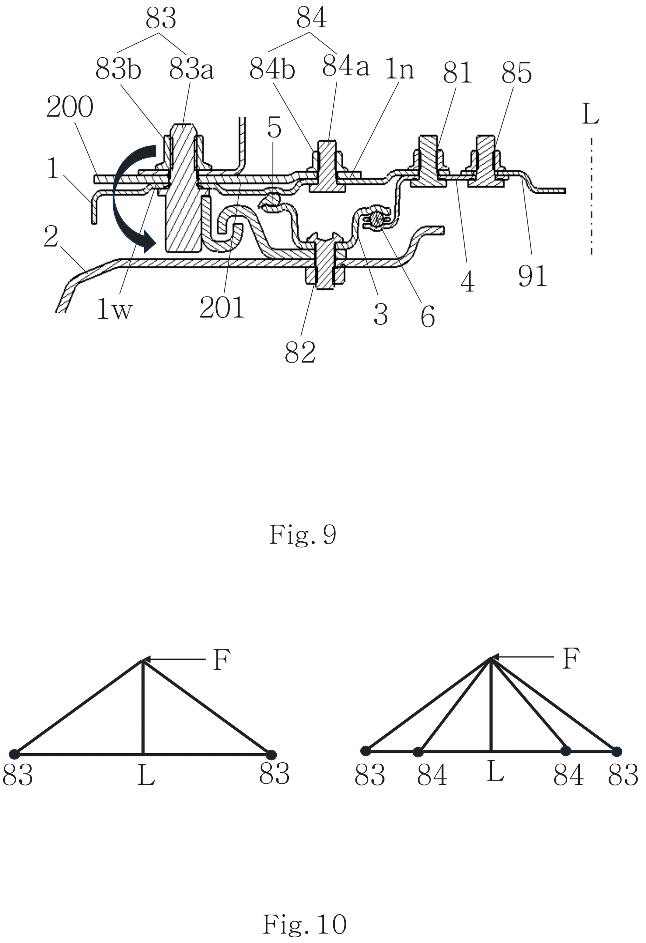

Regarding the fasteners, bolts, screws, rivets, or pins may be used. In this embodiment, bolts are selected for the fasteners. As shown in Figures 4 and 9, the first fastener 81, the second fastener 82, and the third fastener 83 comprise a first screw rod 81a, a second screw rod 82a, a third screw rod 83a for connection and a first nut 81b, a second nut 82b and a third nut 83b for tightening, respectively.

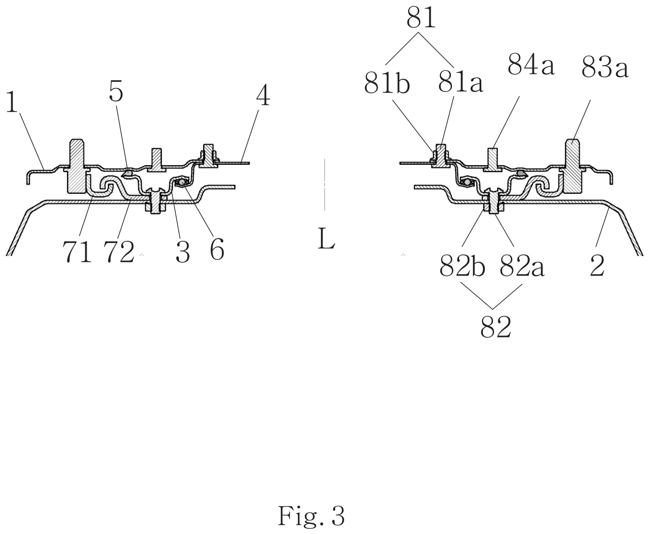

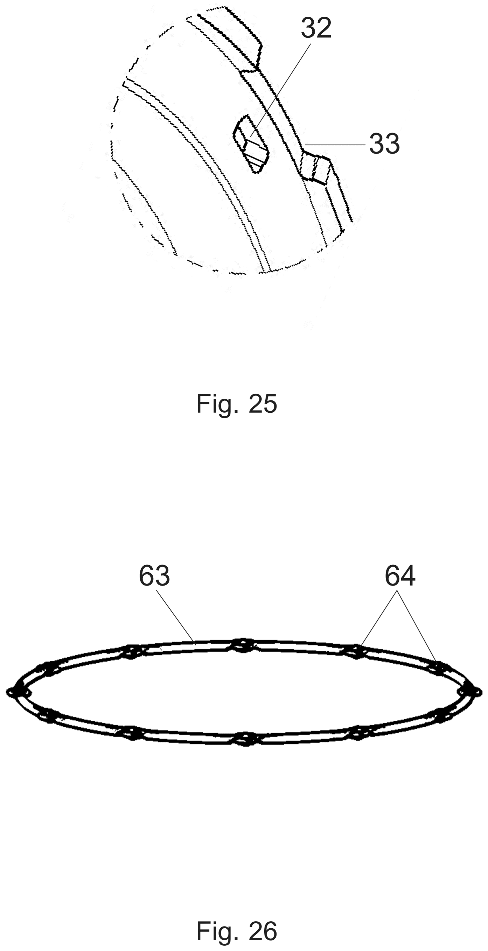

For the outer ring friction member 5 and the inner ring friction member 6, either friction strips or ball assemblies capable of providing rolling support may be selected. The two members can be combined in different configurations. For example, in this first embodiment, as shown in Figures 3 and 4, the outer ring friction member 5 is configured as a friction strip, and the inner ring friction member 6 is configured as a ball assembly. Referring to Figure 26, the ball assembly includes an annular retainer 63 and a plurality of balls 64 arranged at intervals in a circumferential direction on the retainer 63, wherein the ball 64 can roll freely within the range of its own diameter. The stationary disc 3 and the movable disc 4 are supported by the balls 64, while the stationary disc 3 and the upper connecting plate 1 are supported by the friction strip. During rotation of the upper connecting plate 1 and the movable disc 4 relative to the lower connecting plate 2 and the stationary disc 3, the balls 64 of the ball assembly undergo rolling friction relative to the stationary disc 3 and the movable disc 4, thereby simultaneously ensuring rigidity and low resistance. The friction strip is specifically made of POM (polyoxymethylene, a type of synthetic resin), which offers high self-lubrication, excellent rigidity, and a dynamic coefficient of friction as low as ≤0.1, ensuring smooth operation.

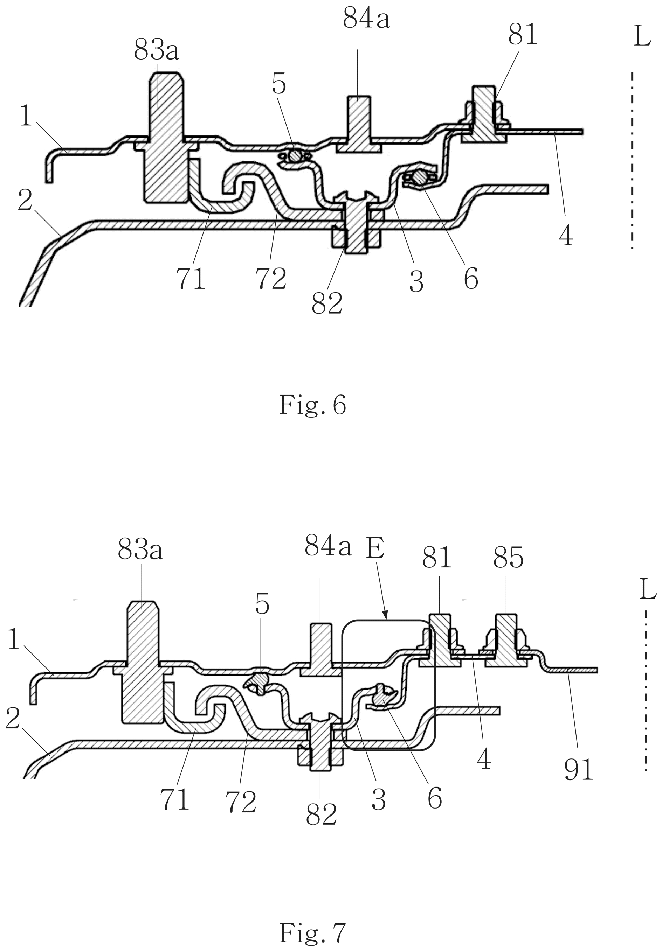

In a second embodiment, referring to Figure 5, the outer ring friction member 5 is configured as a ball assembly, and the inner ring friction member 6 is configured as a friction strip. In a third embodiment, referring to Figure 6, both the outer ring friction member 5 and the inner ring friction member 6 are configured as ball assemblies. In a fourth embodiment, referring to Figure 7, both the outer ring friction member 5 and the inner ring friction member 6 are configured as friction strips.

It should be noted that:
The solution combining friction strips and ball assemblies (i.e., the first and second embodiments) simultaneously addresses both noise/vibration and stiffness concerns, achieving superior operational smoothness, compared to the dual ball assembly configuration (i.e., the third embodiment) and the dual friction strip configuration (i.e., the fourth embodiment). Moreover, in configurations where the outer ring friction member 5 is a friction strip (i.e., the first and fourth embodiments), indentation issues do not occur when the support structure is subjected to downward normal force, unlike configurations where the outer ring friction member 5 is a ball assembly (i.e., the second and third embodiments). Even in the case where the inner ring friction member 6 is a ball assembly (i.e., the first embodiment), since the ball assembly is located on the inner side and is not directly exposed to the aforementioned normal force, the balls will not cause indentations on the inner edge of the stationary disc 3 (i.e., the first inner flange 3n of stationary disc 3) or the outer edge of the movable disc 4 (i.e., the second outer flange 4n of movable disc 4).

For the configurations employing ball assemblies (i.e., the first, second, and third embodiments), in order to constrain the balls 64 to roll within their respective tracks, it is preferable to configure the surfaces contacting the balls 64 as raceway surfaces. Taking the first embodiment as an example, raceway surfaces are formed on the first inner flange 3n of the stationary disc 3 and the second outer flange 4w of the movable disc 4. When the ball assembly is clamped, the raceway surface makes intimate contact with the corresponding balls 64. These balls 64 can be divided into multiple size groups and selected to achieve an appropriate interference fit with the raceway surface, ensuring secure clamping and preventing any noise issues.

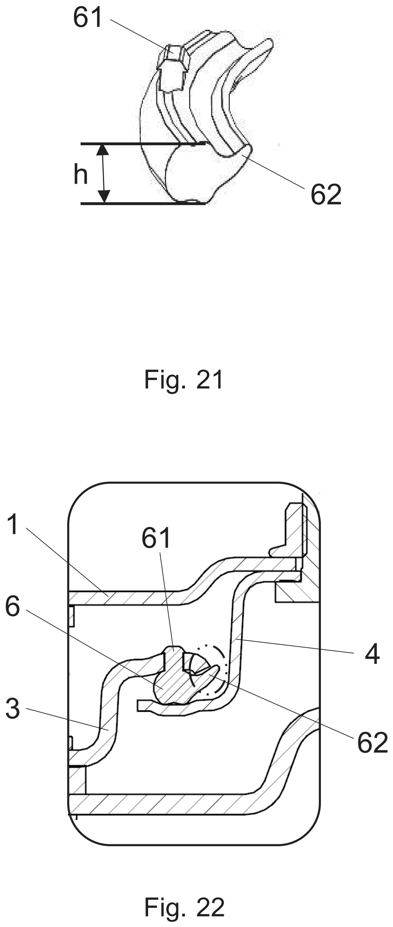

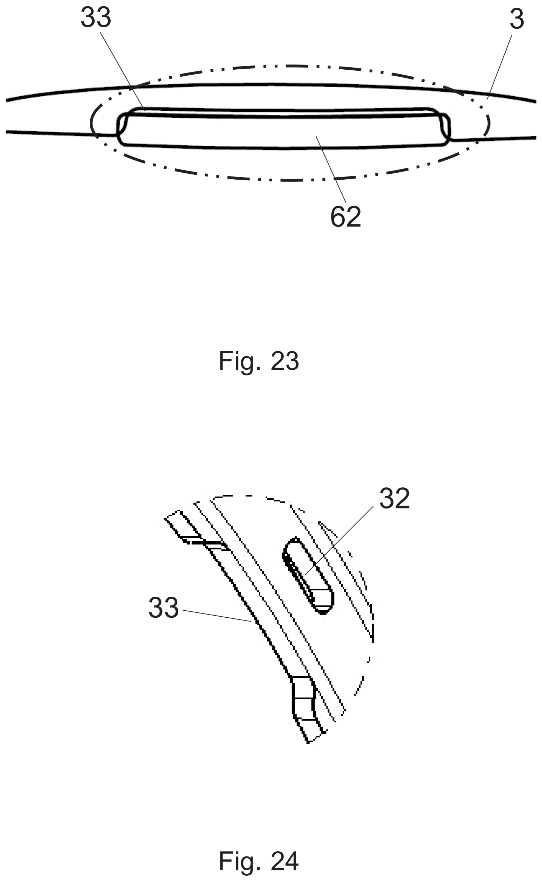

For the configurations employing friction strips (i.e., the first, second, and fourth embodiments), in order to prevent vibration-induced noise caused by vehicle vibrations during driving or by the friction strip rotating along with the support structure during its rotation, certain positioning structures must be provided. As specifically shown in Figures 21 to 25, a plurality of protrusions 61 arranged at intervals in a circumferential direction are formed on the friction strip, and a plurality of snap holes 32 configured for inserting the respective protrusions 61 in a one-to-one correspondence are provided on the first outer flange and/or the first inner flange of the stationary disc 3 corresponding to the friction strip, thereby achieving Z-directional limiting of the friction strip. Furthermore, a plurality of elongated ears 62 arranged at intervals in a circumferential direction are formed on the friction strip, and a plurality of notches 33 configured for engaging the respective elongated ears 62 in a one-to-one correspondence are provided on an outer edge of the first outer flange and/or an inner edge of the first inner flange of the stationary disc 3 corresponding to the friction strip, thereby achieving X- and Y-directional limiting of the friction strip. By means of both the protrusion 61 and the elongated ear 62 features together limiting the friction strip, limiting in the X, Y, and Z directions can be simultaneously achieved, which can effectively fix the friction strip and provide better limiting effect. Of course, in some embodiments, only the protrusion 61 feature or only the elongated ear 62 feature may be provided as needed, with the snap hole 32 and the notch 33 correspondingly provided.

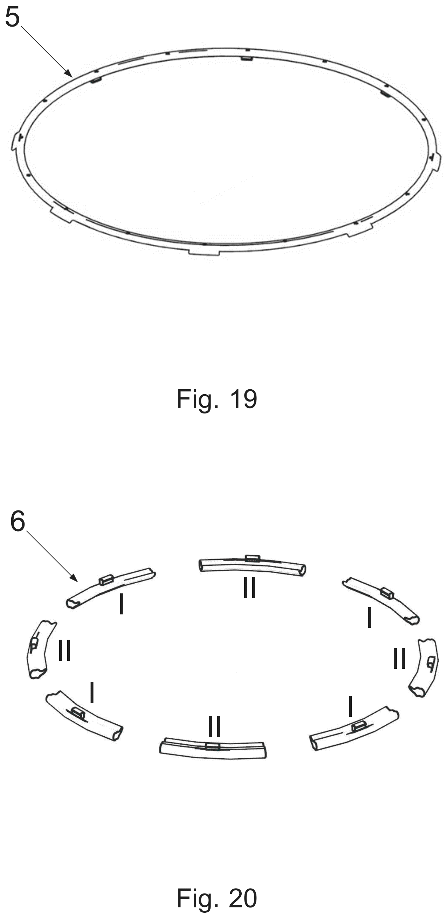

Additionally, regarding the specific structure of the friction strip, it can be a continuous annular structure or a discontinuous annular structure formed by arranging a plurality of first arcuate segments I and a plurality of second arcuate segments II at intervals, wherein, the first arcuate segment I has a first elastic coefficient, and the second arcuate segment II has a second elastic coefficient lower than the first elastic coefficient. Taking the fourth embodiment as an example, in conjunction with Figures 19 and 20, the outer ring friction member 5 adopts a continuous annular structure, while the inner ring friction member 6 is composed of a plurality of first arcuate segments I and a plurality of second arcuate segments II arranged in an annular shape at intervals. The first arcuate segment I and the second arcuate segment II can be alternately arranged one by one or arranged at intervals according to other rules. By setting the inner friction strip to be composed of two types of arcuate segments with different elastic coefficients, the arcuate segment with a higher elastic coefficient (i.e., the first arcuate segment I) is in an interference fit state with the stationary disc 3 and the movable disc 4 (mainly used to absorb assembly tolerances), while the arcuate segment with a lower elastic coefficient (i.e., the second arcuate segment II) normally matches the stationary disc 3 and the movable disc 4 (mainly used to ensure stiffness).

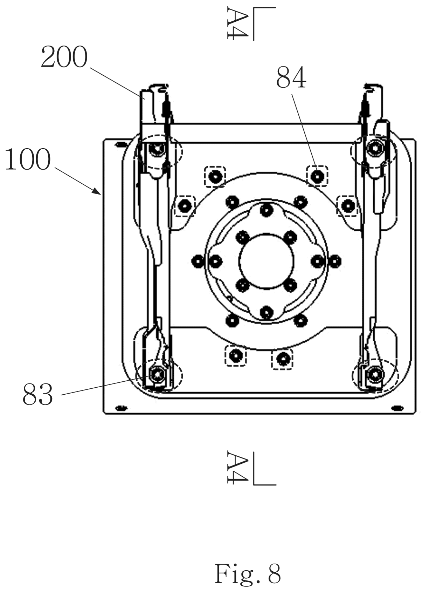

Preferably, in conjunction with Figures 4, 8 to 10, the rotating joint assembly 100 also includes a fourth fastener 84. The upper connecting plate 1 is tightly connected to the seat frame 200 via the third fastener 83 and the fourth fastener 84. The fourth fastener 84 can also use bolts, screws, rivets, or pins. In this embodiment, the fourth fastener 84 also uses a bolt form, specifically including a fourth screw rod 84a for connection and a fourth nut 84b for tightening. Regarding the quantity and arrangement positions of the third fastener 83 and the fourth fastener 84, refer to Figure 8: the positions enclosed by square dashed lines indicate the arrangement positions for the third fastener 83, and the positions enclosed by elliptical dashed lines indicate the arrangement positions for the fourth fastener 84. By adding the fourth fastener 84, the contact area between the upper connecting plate 1 and the seat frame 200 is increased, which is equivalent to thickening the material thickness of the upper connecting plate 1. When force is applied, the upper connecting plate 1 and the seat frame 200 deform together, enhancing the rigidity of the support structure. Specifically, in conjunction with Figure 10, the upper connecting plate 1 is connected to the seat frame 200 only at a single point via the third fastener 83. When subjected to force F, the upper connecting plate 1 itself deforms under stress, resulting in poor rigidity. However, when the upper connecting plate 1 and the seat frame 200 are connected simultaneously via the third fastener 83 and the fourth fastener 84, the upper connecting plate 1 and the seat frame 200 deform together under force F, thereby enhancing the rigidity of the support structure.

Furthermore, as shown in Figure 9, the upper connecting plate 1 is provided with an inner mounting surface 1n for connection with the fourth fastener 84 and an outer mounting surface 1w for connection with the third fastener 83, located respectively on inner and outer sides of the outer ring friction member 5, and wherein the height of the outer mounting surface 1w is higher than that of the inner mounting surface 1n in an unassembled state. Since the frame mounting surface 201 of the seat frame 200 is flush or lower on the outside than on the inside, and its rigidity is stronger than that of the upper connecting plate 1, during the assembly and tightening of the third fastener 83 and the fourth fastener 84, in order to maintain the same height, the frame mounting surface 201 causes the outer ring of the upper connecting plate 1 to have a tendency to deform downward, which is equivalent to clamping the outer ring friction member 5. Meanwhile, dual-side clamping of the inner ring friction member 6 is achieved via fastening by the first fastener 81 and the second fastener 82 on inner and outer sides, respectively. Through this structural design, both the outer ring friction member 5 and the inner ring friction member 6 can be clamped, ensuring no vibration noise problems occur with the outer ring friction member 5 and the inner ring friction member 6. According to actual conditions, when the inner edge of the upper connecting plate 1 extends only a short distance into the inner side of the outer ring friction member 5, the inner mounting surface 1n and the outer mounting surface 1w may both be formed on the outer side of the outer ring friction member 5; due to the height difference between the aforementioned mounting surfaces, a clamping effect on the outer side of the outer ring friction member 5 can still be achieved, albeit with relatively weaker effectiveness.

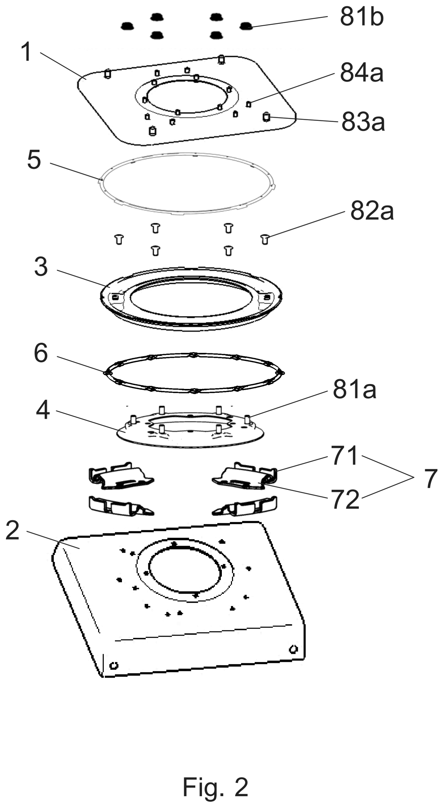

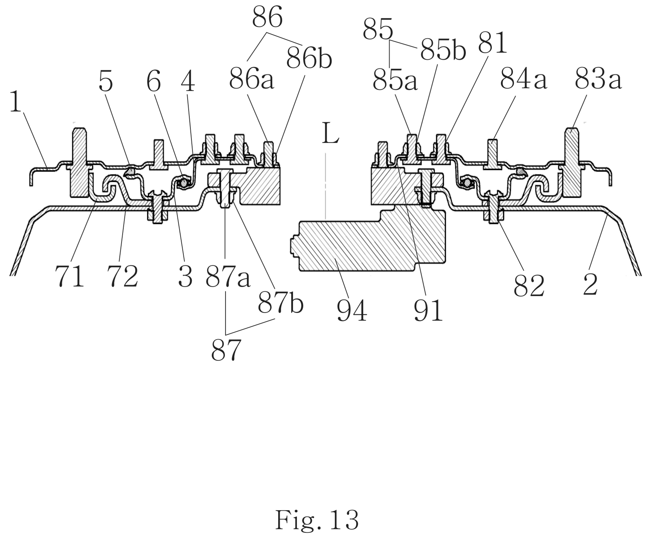

Preferably, referring to Figures 2 to 7, 13, and 16, the rotating joint assembly 100 also includes an upper embracing clamp 71 and a lower embracing clamp 72. The upper embracing clamp 71 is fixedly connected to the third fastener 83 or the upper connecting plate 1, and the lower embracing clamp 72 is fixedly connected to the lower connecting plate 2. The inner edges of the upper embracing clamp 71 and the outer edges of the lower embracing clamp 72 extend and bend towards each other to form an interlocking structure with a certain gap. Through the design of the embracing clamp structure, the strength and overall stability of the support structure are improved. The upper embracing clamp 71 can be welded and fixed to the third fastener 83 or welded and fixed to the upper connecting plate 1. Depending on different welding positions, adjustments of the gap between the lower connecting plate 2 can be achieved. The lower embracing clamp 72 may be welded and fixed to the lower connecting plate 2 or may be fastened together with the lower connecting plate 2 and the stationary disc 3 via the second fastener 82 or alternatively secured using a combination of aforementioned welding and fastening methods. It should be noted that even if the upper embracing clamp 71 and the lower embracing clamp 72 are fixed by welding, no thermal effect will be introduced to the contact surfaces with the outer ring friction member 5 and the inner ring friction member 6 because the upper embracing clamp 71 and the lower embracing clamp 72 are relatively independent structures without direct contact with the outer ring friction member 5 and the inner ring friction member 6. Additionally, the upper embracing clamp 71 and the lower embracing clamp 72 adopt a discontinuous layout form, as shown in Figure 2, offering better disassembly and installation. Moreover, based on strength requirements, the number of upper embracing clamps 71 and lower embracing clamps 72 can be increased or decreased, or even eliminated, without affecting the setting of the friction members, achieving a high degree of platformization.

Preferably, the support structure also includes a control mechanism, which is installed on the upper connecting plate 1 and acts on the stationary disc 3, or installed on the lower connecting plate 2 and acts on the movable disc 4, to control the rotation of the upper connecting plate 1 relative to the lower connecting plate 2.

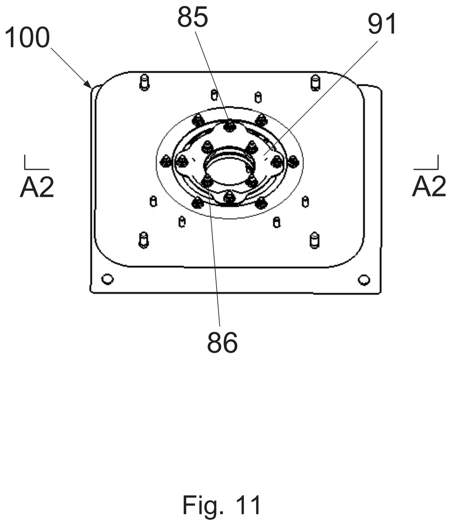

The control mechanism can be an electric mechanism. Specifically, referring to Figures 11 to 13, the control mechanism includes an electric locking stationary disc 92, an electric locking movable disc 93, and a drive motor 94. The electric locking stationary disc 92, electric locking movable disc 93, and drive motor 94 are pre-assembled into a whole. The rotary support structure also includes an upper cover plate 91, wherein the outer edge side of the upper cover plate 91 is tightly connected to the inner edge side of the movable disc 4 via the fifth fastener 85, and the inner edge side of the upper cover plate 91 is tightly connected to the electric locking movable disc 93 via the sixth fastener 86. The electric locking stationary disc 92 is tightly connected to the lower connecting plate 2 via the seventh fastener 87. The electric locking movable disc 93 can rotate relative to the electric locking stationary disc 92. The drive motor 94 is mounted on the electric locking stationary disc 92 and is used to drive or lock the rotation of the electric locking movable disc 93 relative to the electric locking stationary disc 92. The fifth fastener 85, sixth fastener 86, and seventh fastener 87 can also use bolts, screws, rivets, or pins. In this embodiment, the fifth fastener 85, sixth fastener 86, and seventh fastener 87 also use bolt forms, respectively including fifth screw rods 85a, sixth screw rods 86a, seventh screw rods 87a for connection, and fifth nuts 85b, sixth nuts 86b, seventh nuts 87b for tightening. The outer edge side of the upper cover plate 91 is provided with movable disc-cover plate connection holes 911 for the fifth screw rod 85a to pass through, and the inner edge side is provided with cover plate locking connection holes 912 for the sixth screw rod 86a to pass through. The inner edge side of the movable disc 4 is provided with movable disc-cover plate connection holes 41 for the fifth screw rod 85a to pass through. The drive shaft of the drive motor 94 is connected to the electric locking movable disc 93. When the drive shaft drives the electric locking movable disc 93 to rotate, the electric locking movable disc 93 drives the upper cover plate 91, which in turn drives the movable disc 4 and the upper connecting plate 1 to rotate relative to the lower connecting plate 2. And when the drive shaft stops rotating, all the aforementioned rotational movements will stop simultaneously, and the upper connecting plate 1 is in a locked state. It should be noted that the electric locking movable disc 93 may also be connected to the upper connecting plate 1 via the upper cover plate 91, or alternatively, without going through the upper cover plate 91, be directly connected to the movable disc 4 or the upper connecting plate 1. Alternatively, the electric locking stationary disc 92 can be directly or indirectly connected to the movable disc 4 or the upper connecting plate 1, while the electric locking movable disc 93 is connected to the lower connecting plate 2. When choosing to connect the electric locking stationary disc 92 to the movable disc 4 or the upper connecting plate 1, when the drive shaft of the drive motor 94 drives the electric locking movable disc 93, since the lower connecting plate 2 remains relatively stationary, the drive motor 94 will rotate along with the electric locking stationary disc 92, thus driving the movable disc 4 or the upper connecting plate 1 to rotate relative to the lower connecting plate 2.

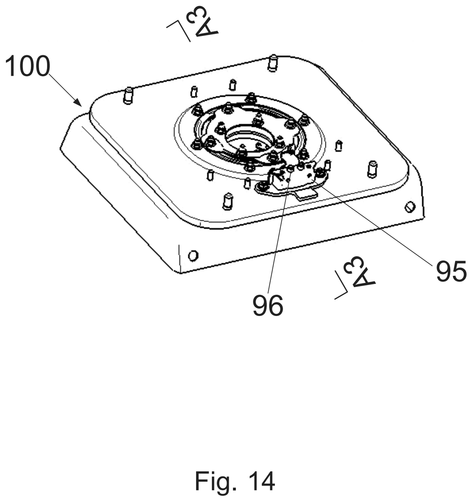

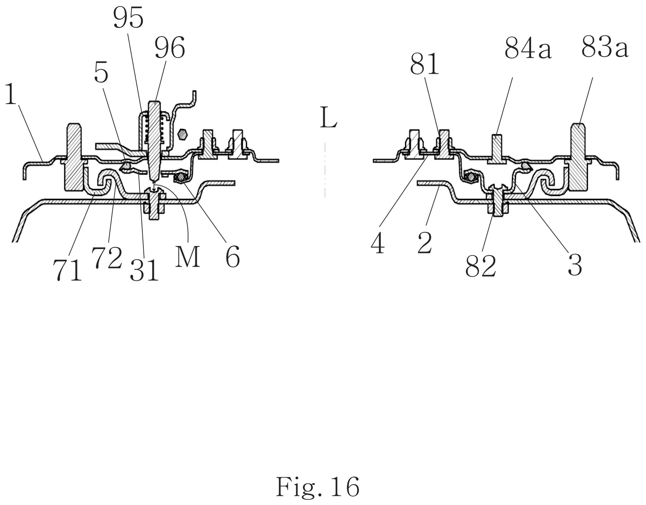

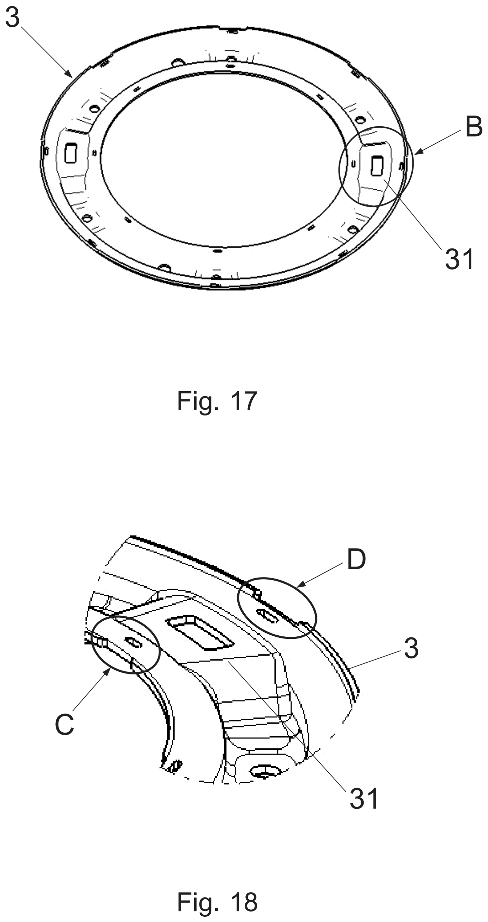

The control mechanism can also be a manual mechanism. Specifically, referring to Figures 14 to 18, the control mechanism includes a manual locking mounting member 95 and a manual locking pin 96. The manual locking mounting member 95 is installed on the upper connecting plate 1, and the manual locking pin 96 is movably mounted on the manual locking mounting member 95. Pin holes for movably inserting the manual locking pin 96 are provided at positions on both the upper connecting plate 1 and the stationary disc 3 corresponding to the manual locking pin 96. When the manual locking pin 96 is inserted into the pin hole of the stationary disc 3, the upper connecting plate 1 cannot rotate relative to the lower connecting plate 2 and is in a locked state. When the manual locking pin 96 is pulled upward out of the pin hole in the stationary disc 3, the locked state is released, and the upper connecting plate 1 can rotate relative to the lower connecting plate 2. Preferably, in order to ensure that the manual locking pin 96 does not come into contact with the stationary disc 3 during rotation to prevent noise, the region between the first outer flange 3w and the first inner flange 3n of the stationary disc 3 is generally concave, but at the locking position corresponding to the manual locking pin 96, it curves upward to form a locking boss 31, with the corresponding pin hole located on the locking boss 31, as specifically shown in Figures 16 to 18 in conjunction with Figure 4.

From the above structure, it can be seen that the control actions achievable by the electric control mechanism and the manual control mechanism are different. For the manual mechanism, the control action it can achieve is limited to locking the rotation of the upper connecting plate 1 relative to the lower connecting plate 2, while the rotation of the upper connecting plate 1 relative to the lower connecting plate 2 is achieved by human force. For the electric mechanism, it can both control the rotation of the upper connecting plate 1 relative to the lower connecting plate 2 through driving and lock the rotation of the upper connecting plate 1 relative to the lower connecting plate 2 by stopping driving. Additionally, via the modular design of the rotary support structure mentioned above, the rotating joint assembly 100 can be used for both manual and electric applications, with a wide range of applications.

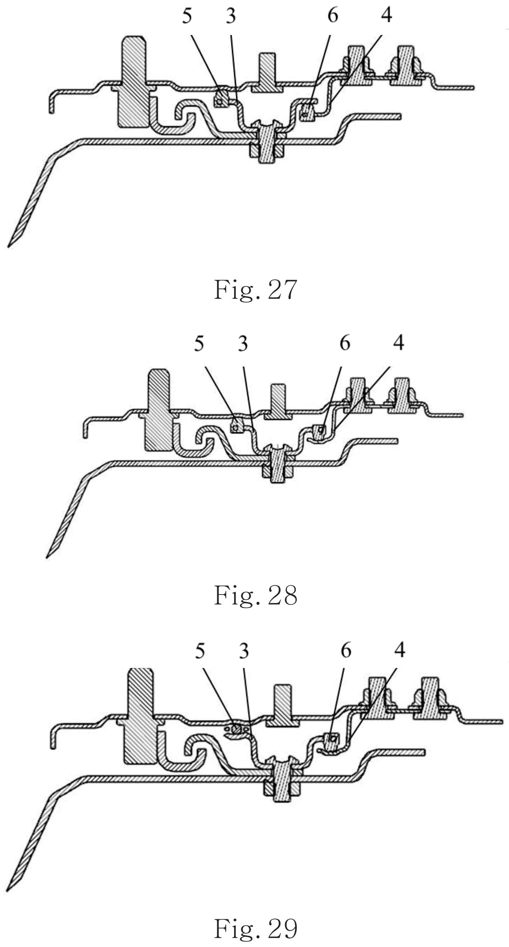

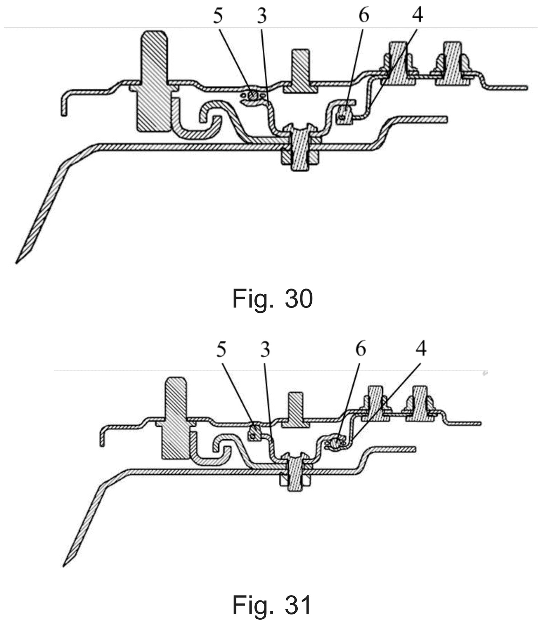

To facilitate the assembly of the corresponding friction members, in some embodiments, the corresponding friction members can also be formed on the stationary disc 3 or the movable disc 4 through overmolding (also known as injection overmolding), thereby forming the respective friction strips. Figures 27 to 31 show different overmolding schemes for the inner ring friction member 6 and the outer ring friction member 5. In some embodiments, the outer ring friction member 5 can be a friction strip formed on the outer edge of the stationary disc 3 by overmolding (refer to Figures 27, 28, and 31), while the inner ring friction member 6 can be a friction strip formed on the outer edge of the movable disc 4 (refer to Figures 27 and 30) or on the inner edge of the stationary disc 3 (refer to Figures 28 and 29) by overmolding. Through these methods, the corresponding friction members can be pre-assembled on the corresponding stationary disc 3 or movable disc 4, thereby ensuring that the inner ring friction member 6 is always in a preset positioning position relative to the stationary disc 3, which ensures that the outer ring friction member 5 is better clamped between the upper connecting plate and the outer edge of the stationary disc 3; and/or ensures that the outer ring friction member 5 is always in a preset positioning position relative to the stationary disc 3 or the movable disc 4, which ensures that the inner ring friction member 6 is better clamped between the inner edge of the stationary disc 3 and the outer edge of the movable disc 4.

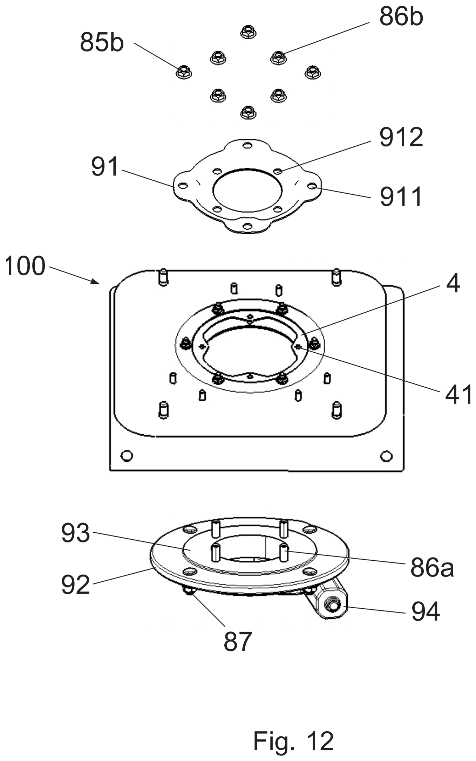

Regarding the assembly steps of the rotating joint assembly 100 and the electric form of the control mechanism, taking the first embodiment as an example, in conjunction with Figures 2 and 12:
1) The overall installation sequence is from bottom to top. First, fix the lower connecting plate 2, then stack the pre-assembled electric control mechanism and tighten it with bolts to the lower connecting plate 2.
2) According to the size of the raceway surfaces of the stationary disc 3 and the movable disc 4, select appropriately sized balls 64, place the balls 64 in the retainer 63 to form a ball assembly (i.e., the inner ring friction member 6).
3) After placing the ball assembly in the raceway of the movable disc 4, stack the lower embracing clamp 72 and the stationary disc 3.
4) Tighten the lower embracing clamp 72 and the stationary disc 3 to the lower connecting plate 2 with bolts, ensuring that the raceway surface falls on the upper surface of the balls 64.
5) Place the friction strip (i.e., the movable disc 4) on the raceway surface of the stationary disc 3, stack the upper connecting plate 1, and then secure the upper connecting plate 1 to the movable disc 4 with bolts.
6) Based on the gap between the upper embracing clamp 71 and the lower embracing clamp 72, weld and fix the upper embracing clamp 71 to the upper connecting plate 1 or to the third fastener 83.
7) Secure the upper cover plate 91, the movable disc 4, and the electric control mechanism with bolts, completing the assembly.

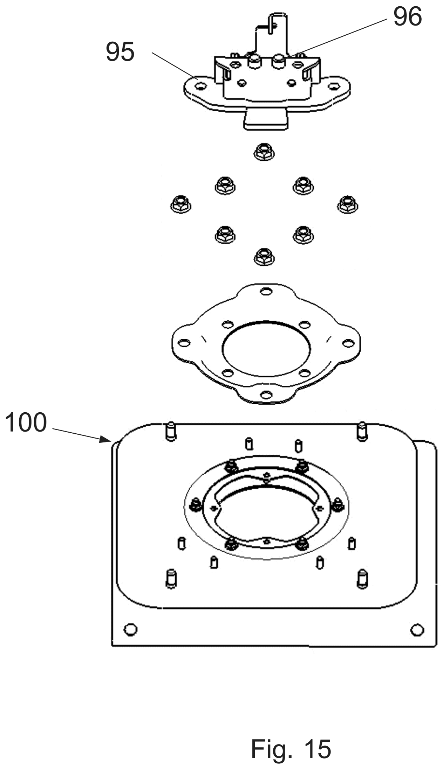

Regarding the assembly steps of the rotating joint assembly 100 and the manual form of the control mechanism, also taking the first embodiment as an example, in conjunction with Figures 2 and 15:
1) The overall installation sequence is from bottom to top. First, fix the lower connecting plate 2.
2) According to the size of the raceway surfaces of the stationary disc 3 and the movable disc 4, select appropriately sized balls 64, place the balls 64 in the retainer 63 to form a ball assembly (i.e., the inner ring friction member 6).
3) After placing the ball assembly in the raceway of the movable disc 4, stack the lower embracing clamp 72 and the stationary disc 3.
4) Tighten the lower embracing clamp 72 and the stationary disc 3 to the lower connecting plate 2 with bolts, ensuring that the raceway surface falls on the upper surface of the balls 64.
5) Place the friction strip (i.e., the movable disc 4) on the raceway surface of the stationary disc 3, stack the upper connecting plate 1, and then secure the upper connecting plate 1 to the movable disc 4 with bolts.
6) Based on the gap between the upper embracing clamp 71 and the lower embracing clamp 72, weld and fix the upper embracing clamp 71 to the upper connecting plate 1 or to the third fastener 83.
7) Insert the manual locking pin 96 into the manual locking mounting member 95 and secure the manual locking mounting member 95 to the upper connecting plate 1 with bolts, completing the assembly.

The above description in conjunction with the drawings and embodiments illustrates the detailed instructions for the utility model. Ordinary technicians in the field can make various changes based on the above instructions for the utility model. Therefore, certain details in the embodiments should not be considered as limitations to the utility model, and the protection scope of the utility model will be defined by the appended claims.

## Claims

1. A rotary support structure, **characterized in that** it is used to enable a seat frame to rotate horizontally about a central axis, wherein the rotary support structure comprises a rotating joint assembly, the rotating joint assembly comprising a lower connecting plate, an upper connecting plate rotatable relative to the lower connecting plate about the central axis, a stationary disc and a movable disc arranged between the upper connecting plate and the lower connecting plate, an outer ring friction member and an inner ring friction member, wherein:
the movable disc is tightly connected to the upper connecting plate via a first fastener, the stationary disc is tightly connected to the lower connecting plate via a second fastener, and the upper connecting plate is tightly connected to the seat frame via a third fastener; and
the outer ring friction member is clamped between the upper connecting plate and an outer edge of the stationary disc, and the inner ring friction member is clamped between an inner edge of the stationary disc and an outer edge of the movable disc.

2. The rotary support structure according to claim 1, **characterized in that** the rotating joint assembly further comprises a fourth fastener, wherein the upper connecting plate is tightly connected to the seat frame via the third fastener and the fourth fastener to enhance the rigidity of the rotary support structure.

3. The rotary support structure according to claim 2, **characterized in that** the upper connecting plate is provided with an inner mounting surface for connection with the fourth fastener and an outer mounting surface for connection with the third fastener, located respectively on inner and outer sides of the outer ring friction member, and wherein the height of the outer mounting surface is higher than that of the inner mounting surface in an unassembled state, so as to clamp the outer ring friction member in an assembled state.

4. The rotary support structure according to any one of claims 1 to 3, **characterized in that** it further comprises a control mechanism mounted on the upper connecting plate and acting on the stationary disc, or mounted on the lower connecting plate and acting on the movable disc, to control rotation of the upper connecting plate relative to the lower connecting plate.

5. The rotary support structure according to claim 4, **characterized in that** the control mechanism comprises an electric locking stationary disc, an electric locking movable disc, and a drive motor, wherein one of the electric locking stationary disc and the electric locking movable disc is connected to the lower connecting plate, and the other of the electric locking stationary disc and the electric locking movable disc is connected directly or indirectly to the upper connecting plate or the movable disc; wherein the electric locking movable disc is rotatable relative to the electric locking stationary disc, and the drive motor drives or locks the relative rotation between the electric locking movable disc and the electric locking stationary disc.

6. The rotary support structure according to claim 4, **characterized in that** the control mechanism comprises a manual locking mounting member and a manual locking pin, wherein the manual locking mounting member is mounted on the upper connecting plate, and the manual locking pin is movably mounted on the manual locking mounting member so that the manual locking pin can pass through the stationary disc to restrict rotation of the movable disc relative to the stationary disc.

7. The rotary support structure according to any one of claims 1 to 3, **characterized in that**
one of the outer ring friction member and the inner ring friction member is a friction strip, and the other of the outer ring friction member and the inner ring friction member is a ball assembly.

8. The rotary support structure according to any one of claim 1 to 3, **characterized in that** both the outer ring friction member and the inner ring friction member are ball assemblies.

9. The rotary support structure according to any one of claim 1 to 3, **characterized in that** both the outer ring friction member and the inner ring friction member are friction strips.

10. The rotary support structure according to any one of claims 7 and 9, **characterized in that** an inner edge and an outer edge of the stationary disc extend toward the upper connecting plate and are folded inwardly and outwardly to form a first inner flange and a first outer flange, respectively; an outer edge of the movable disc extends toward the lower connecting plate and is folded outwardly to form a second outer flange; the outer ring friction member is clamped between the upper connecting plate and the first outer flange of the stationary disc; and the inner ring friction member is clamped between the first inner flange of the stationary disc and the second outer flange of the movable disc.

11. The rotary support structure according to claim 10, **characterized in that** a plurality of protrusions arranged at intervals in a circumferential direction are formed on the friction strip, and a plurality of snap holes configured for inserting the respective plurality of protrusions in a one-to-one correspondence are provided on the first outer flange and/or the first inner flange of the stationary disc corresponding to the friction strip.

12. The rotary support structure according to claim 10, **characterized in that** a plurality of elongated ears arranged at intervals in a circumferential direction are formed on the friction strip, and a plurality of notches configured for engaging the respective plurality of elongated ears in a one-to-one correspondence are provided on an outer edge of the first outer flange and/or an inner edge of the first inner flange of the stationary disc corresponding to the friction strip.

13. The rotary support structure according to any one of claims 7 and 9, **characterized in that** the outer ring friction member and/or the inner ring friction member is a continuous annular structure, or a discontinuous annular structure formed by arranging a plurality of first arcuate segments and a plurality of second arcuate segments at intervals, wherein the first arcuate segment has a first elastic coefficient, and the second arcuate segment has a second elastic coefficient lower than the first elastic coefficient.

14. The rotary support structure according to any one of claims 7 and 9, **characterized in that**
the outer ring friction member is a friction strip formed on the outer edge of the stationary disc by overmolding; and/or
the inner ring friction member is a friction strip formed on the inner edge of the stationary disc or on the outer edge of the movable disc by overmolding.
